# EUROPEAN PATENT SPECIFICATION

(11) **EP 4 192 077 B1**
(45) Date of publication and mention of the grant of the patent: **18.02.2026**
(21) Application number: 21855572.0
(22) Date of filing: 11.08.2021
(51) Int. Cl.: H04W 76/11, H04W 76/25

(54) **SESSION UPDATE METHOD, TERMINAL, AND NETWORK-SIDE DEVICE**
SITZUNGSAKTUALISIERUNGSVERFAHREN, ENDGERÄT UND NETZWERKSEITIGE VORRICHTUNG
PROCÉDÉ DE MISE À JOUR DE SESSION, TERMINAL ET DISPOSITIF CÔTÉ RÉSEAU

(30) Priority: 13.08.2020 CN 202010815092
(43) Date of publication of application: 07.06.2023
(73) Proprietor: China Mobile Communication Co., Ltd Research Institute, Beijing 100053 (CN); CHINA MOBILE COMMUNICATIONS GROUP CO., LTD., Beijing 100032 (CN)
(72) Inventor: CHEN, Xu, Beijing 100032 (CN); HUANG, Zhenning, Beijing 100032 (CN); ZHANG, Chong, Beijing 100032 (CN); SONG, Yue, Beijing 100032 (CN)
(74) Representative: J A Kemp LLP
(86) International application number: PCT/CN2021/112074
(87) International publication number: WO 2022/033521

(56) References cited:
- CN-A- 107 580 360
- CN-A- 109 788 491
- CN-A- 109 964 468
- CN-A- 110 392 448
- CN-A- 110 474 840
- CN-A- 112 152 926
- CN-A- 112 543 486
- CN-A- 113 015 162
- CN-A- 113 098 726
- US-A1- 2018 324 577
- US-A1- 2020 163 010
- US-A1- 2020 245 405

## Description

### TECHNICAL FIELD

The invention relates to the field of communication technologies, and in particular, to methods for updating a session, a UE and a network entity.

### BACKGROUND

In 5th generation (5G) communication, an end-to-end slice service is provided to offer dedicated, differentiated, and quality-assured private network services to users in vertical industries. After a user in a vertical industry activates the slice service, a network side generates a user equipment (UE) route selection policy (URSP), and delivers the URSP to UE after the UE registers with the network. The UE saves the URSP. When using an application service provided by the user in the vertical industry, the UE selects a specified slice based on the URSP, and a service quality is ensured by a slicing technology in 5G network.

In the related art, although the network side provides the end-to-end slice service and has defined a delivery process and a matching rule of the URSP, it is difficult for the UE to match, based on a route/slice selection policy delivered by the network side, a corresponding slice for a service flow related to an application when the UE matches the application through the URSP. Patent applications US2020245405A1 and US2020163010A1 provide teachings related to the technical field of the invention.

### SUMMARY

Embodiments of the invention provide methods for updating a session, to resolve a problem that it is difficult for UE to select a slice based on a URSP when the UE establishes a session.

To resolve the foregoing technical problem, the invention is implemented as follows.

According to a first aspect, an embodiment of the invention provides a method performed by a user equipment for updating a session as set forth in claim 1.

According to a second aspect, an embodiment of the invention provides a method performed by a network entity for updating a session as set forth in claim 5.

According to a third aspect, an embodiment of the invention provides a user equipment as set forth in claim 11.

According to a fourth aspect, an embodiment of the invention provides a network entity as set forth in claim 12.

Further embodiments are defined by the dependent claims. In the embodiments of the invention, after establishing the PDU session, the terminal receives the indication message sent by the network-side device. The indication message includes the slice identifier and is used to indicate the terminal to modify or re-establish the PDU session or initiate the PDU session establishment procedure based on the slice identifier. In this way, the terminal only needs to modify or re-establish the PDU session or establish a new PDU session based on the slice identifier indicated by the network-side device, such that the PDU session can be switched to the specified slice, and the problem that it is difficult for the UE to select the slice based on the URSP when the UE establishes the session is resolved.

### BRIEF DESCRIPTION OF THE DRAWINGS

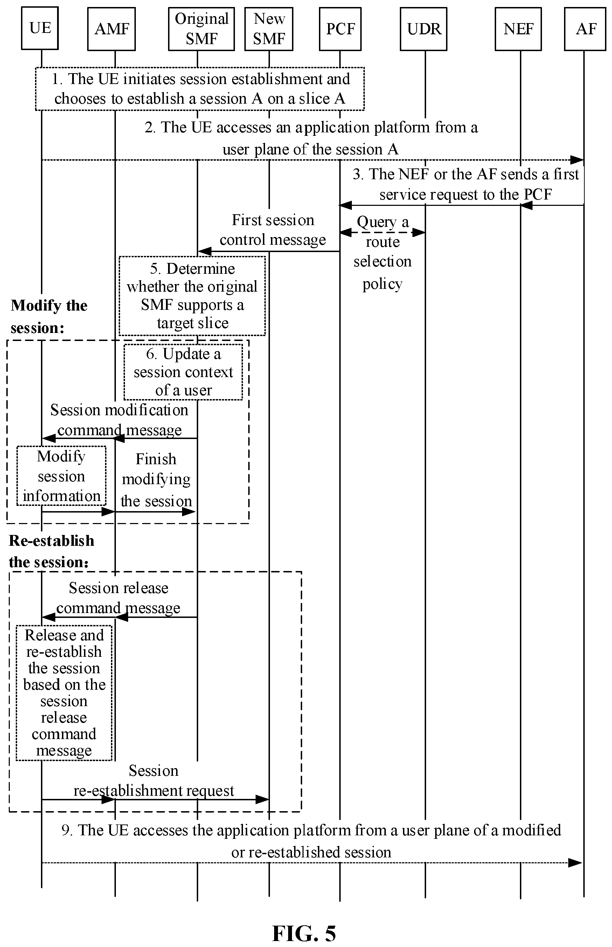

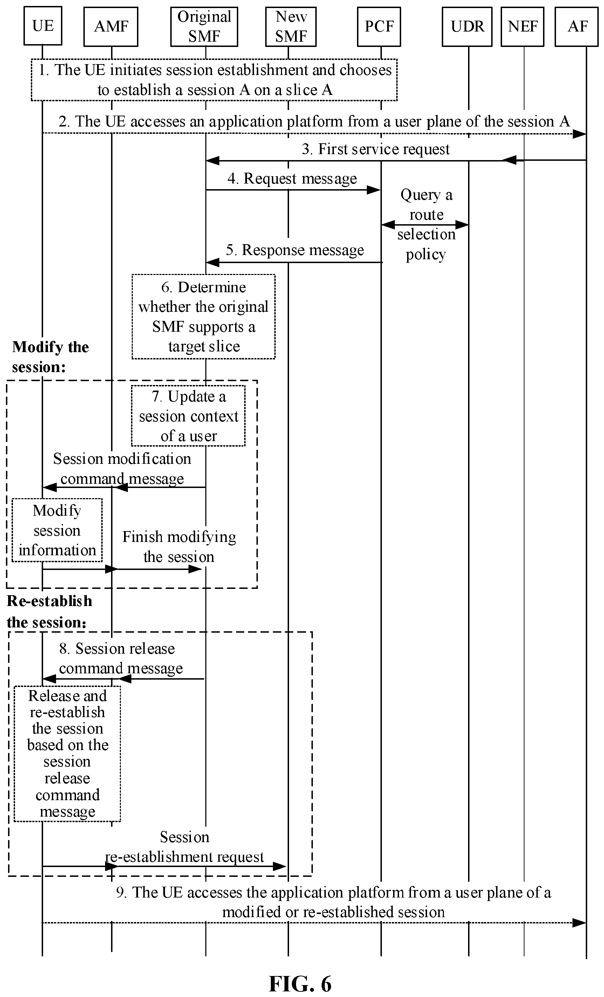

To describe technical solutions in the embodiments of the invention more clearly, the following briefly describes the accompanying drawings required for describing the embodiments of the invention. It is apparent that the accompanying drawings in the following description show merely some embodiments of the invention, and those of ordinary skill in the art may derive other drawings from these accompanying drawings without creative efforts. Moreover it is noted that only Figs. 5, 6, 8 and 9 show embodiments commensurate with the present set of claims, while the other drawings are useful for understanding the present application. Hereby Figs. 5 and 6 in case an SMF supports a S-NSSAI only display a session modification command message, but not a session release command message.
FIG. 1 is a structural diagram of a network system to which the embodiments of the invention are applicable.
FIG. 2 is a flowchart of a first method for updating a session according to an embodiment of the invention.
FIG. 3 is a flowchart of a second method for updating a session according to an embodiment of the invention.
FIG. 4 is a flowchart of a third method for updating a session according to an embodiment not being part of the invention.
FIG. 5 is a flowchart of a first embodiment of a method for updating a session according to an embodiment of the invention.
FIG. 6 is a flowchart of a second embodiment of a method for updating a session according to an embodiment of the invention.
FIG. 7 is a flowchart of a third embodiment of a method for updating a session according to an embodiment of the invention.
FIG. 8 is a structural diagram of a terminal according to an embodiment of the invention.
FIG. 9 is a structural diagram of a network-side device according to an embodiment of the invention.
FIG. 10 is a structural diagram of a PCF according to an embodiment not being part of the invention.
FIG. 11 is a structural diagram of another entity according to the invention.

### DETAILED DESCRIPTION

The technical solutions in the embodiments of the invention are described below clearly and completely with reference to the accompanying drawings in the embodiments of the invention. It is apparent that the described embodiments are merely some rather than all of the embodiments of the invention.

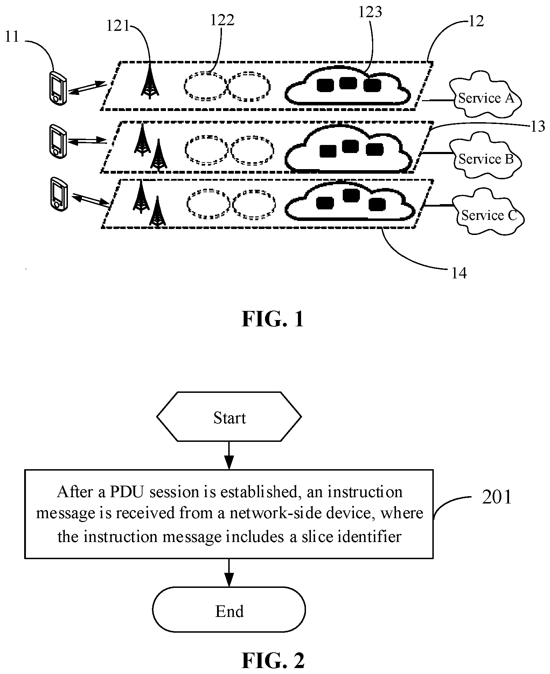

A method for updating a session provided in the embodiments of the invention may be applied to a slice network system shown in FIG. 1. The system includes a terminal 11 and slice networks (such as a first slice network 12, a second slice network 13, and a third slice network 14, as shown in FIG. 1). Different slice networks may correspond to different radio access networks (RANs) 121, transport networks (TNs) 122, and core networks (CNs) 123, to provide different service functions for users through different slice networks, that is, provide dedicated, differentiated, and quality-assured private network services for users in the vertical industries, such as network cloud gaming services for a large network (public network) of a 5G communication system and services for 5G private network customers.

The terminal 11 may also be referred to as a terminal device or UE. The terminal 11 may be a mobile phone, a tablet personal computer, a laptop computer which is also referred to as a notebook computer, a personal digital assistant (PDA), a palmtop computer, a netbook, an ultra-mobile personal computer (UMPC), a mobile Internet device (MID), a wearable device or vehicle UE (VUE), pedestrian UE (PUE), or other terminal-side devices. The wearable device includes a band, a headset, glasses, or the like. A specific type of the terminal 11 is not limited in the embodiments of the invention.

It should be noted that a technology described in the embodiments of the invention is not limited to the 5G communication system, and may also be applied to applications other than a new radio (NR) system, such as a 6th generation (6G) communication system, or the like.

At present, mapping between a slice and an application service is implemented through a predefined URSP. The URSP is delivered to UE after the UE registers with a network. The UE finds information about a specified slice based on the URSP when using the application service, and informs the network of the slice to be selected when establishing a session.

After a user in a vertical industry purchases and activates a slice, a 5G network generates a URSP. The network delivers the URSP to UE after the UE registers with the network. The UE saves the URSP. When using an application service provided by the user in the vertical industry, the UE selects the specified slice based on the URSP, and service quality is ensured by a 5G network slicing technology.

However, in the related art, it is difficult for the UE to match an application through the URSP. It is difficult for the UE to match, based on a route/slice selection policy delivered by the network side, a service flow related to the application, and select the specified slice and a data network name (DNN) to establish a session. Specifically, there are the following three difficulties.

A first difficulty: it is difficult to define an application identity (APP ID) in a URSP in a 3rd Generation Partnership Project (3GPP) standardization protocol. The APP ID is related to an application management environment and may need to be negotiated by a third-party application provider, a terminal vendor, and an operator. Standard progress limits a development of a slice function in the terminal.

A second difficulty: a terminal has practical application limitations when using other service matching conditions, such as an IP address triplet, defined by the URSP. For example, an IP address of an application server may change due to a disaster recovery backup solution or resource adjustment. It is difficult to establish a session based on a slice and DNN selection policy delivered by the network side.

A third difficulty: if the terminal is customized and a route/slice selection policy is built in the terminal to bind a service flow with a slice, an application scenario is limited, resulting in a problem that a slice function is not flexible or the application scenario is inapplicable. For example, in a game slice service, a user may choose from many types of terminals, and it is impossible to customize each selected terminal. For another example, the user in the vertical industry requires multi-slice and further requires terminals in the industry to support multi-slice. In multi-slice scenarios, there is still a situation where slices and applications cannot be mapped.

In the embodiments of the invention, when a terminal accesses an application, a network side notifies the terminal of a slice through which the network provides services for the application, to resolve the foregoing problem.

FIG. 2 is a flowchart of a method for updating a session according to an embodiment of the invention. The method is applied to a terminal. As shown in FIG. 2, the method for updating a session includes the following operations.

In 201, after a PDU session is established, an indication message is received from a network-side device. The indication message includes a slice identifier and is used for indicating the terminal to modify or re-establish the PDU session or initiate a PDU session establishment procedure based on the slice identifier.

The PDU session is a session established on a slice (which may also be referred to as a slice network). The session is used to obtain a service from a service platform. The slice identifier is single network slice selection assistance information (S-NSSAI), that is, indicates the terminal to update the PDU session to a target slice corresponding to the S-NSSAI. The indication message may further include other information, for example, one or more of a session type, a DNN, an Internet Protocol (IP) address, or the like. In this case, the indication information may further indicate the terminal to update a type, a DNN, an IP address, or the like of the session.

For example, when the DNN of the PDU session needs to be modified, the indication message further includes the DNN. In this case, the terminal updates, based on the indication message, the PDU session to a PDU session associated with the S-NSSAI and the DNN.

In a specific embodiment of the invention, the update includes session modification, session re-establishment, initiation of a PDU session establishment procedure, or the like.

It should be noted that in specific implementation, the session may be re-established through a session release command message in the related art. For example, a cause value may be carried in the session release command message to indicate the terminal to release the session, and re-establish the PDU session based on the slice identifier, such that the re-established PDU session is associated with the slice identifier.

In a specific embodiment of the invention, the PDU session being related to/associated with the slice identifier may be understood as that the PDU session is carried by a slice or a slice network indicated by the slice identifier.

During the re-establishment of the PDU session, the indication message may not include other information (such as the session type, DNN, or IP address). When re-establishing the PDU session, the terminal updates only the S-NSSAI, and does not update other session information, such as the session type, DNN, or IP address.

In addition, the indication message may further include an application access address, a mode for processing (retaining or releasing) the original PDU session, and the like, to indicate the terminal to modify or re-establish the PDU session, or initiate the PDU session establishment procedure.

In the embodiments of the invention, the network-side device indicates the terminal to modify or re-establish the PDU session or establish a new PDU session, such that the network side can control UE to provide a service for a user through an appropriate slice. This resolves the problem that it is difficult for the terminal to match, based on the route/slice selection policy delivered by the network side, an appropriate slice for a service flow related to an application.

It should be noted that before the operation 201 is performed, when the terminal establishes the PDU session, the established PDU session may be a session established on any slice network corresponding or not corresponding to a specified application/application server.

When the terminal establishes the PDU session and uses the application, a service flow that needs to be selected to a specified slice may be identified through a user plane and an application detection mechanism. In addition, an entity detects whether the PDU session established by the terminal matches the service flow that needs to be selected to the specified slice. The entity performing the service flow detection notifies a network entity of a detection result. When the network entity learns that the PDU session established by the terminal matches the service flow that needs to be selected to the specified slice, no processing is performed, that is, the terminal keeps the PDU session on the current slice to access the application. When the network entity learns that the PDU session established by the terminal does not match the service flow that needs to be selected to the specified slice, the network side indicates the slice (the S-NSSAI) through which the network provides services for the application, to trigger the terminal to modify or re-establish the PDU session or initiate the PDU session establishment procedure based on the slice identifier. In this way, the terminal switches to the slice corresponding to the specified application.

In specific implementation, the network-side device may be a session management function (SMF) that manages the PDU session or a network platform. The indication message includes at least one of the following messages: a session modification command message sent by the SMF, a session release command message sent by the SMF, or an application trigger message sent by the network platform.

The session modification command message indicates the terminal to replace a slice identifier associated with the PDU session with a slice identifier included in the session modification command message.

The session release command message indicates the terminal to release the session and re-establish the session based on the slice identifier.

The application trigger message indicates the terminal to access an application server by using a PDU session associated with the slice identifier.

In a first implementation, the indication message is the session modification command message sent by the SMF that manages the PDU session. The session modification command message indicates the terminal to replace the slice identifier associated with the PDU session with the slice identifier included in the session modification command message, to update the PDU session.

In specific implementation, modifying the PDU session may be understood as modifying an attribute of the PDU session.

In this implementation, the terminal modifies the attribute of the PDU session based on the session modification command message sent by the SMF, to replace the slice identifier associated with the PDU session with the slice identifier included in the session modification command message, such that the PDU session is associated with the target slice.

In a second implementation, the indication message is the session release command message sent by the SMF that manages the PDU session. The session release command message indicates the terminal to release the session and re-establish the session based on the slice identifier.

In this implementation, the terminal releases the PDU session and re-establishes the session associated with the slice identifier based on the session release command message sent by the SMF.

Further, the session release command message may carry a cause value. The cause value indicates the terminal to re-establish the PDU session. The re-established PDU session is associated with the slice identifier.

In this way, after releasing the PDU session, the terminal re-establishes the PDU session. Specifically, the PDU session may be established on the slice corresponding to the slice identifier sent by the network side, such that the PDU session is associated with the target slice.

In actual application, after re-establishing the PDU session, the terminal may send a service flow of the current PDU session to a user plane channel of the re-established PDU session.

In a third implementation, the indication message is the application trigger message sent by the network platform. The application trigger message indicates the terminal to access the application server by using the PDU session associated with the slice identifier.

In a specific embodiment of the invention, the indication message may be a new session establishment command message sent by the SMF that manages the PDU session. The session release command message indicates the terminal to establish a new session based on the slice identifier.

A difference between this implementation and the foregoing two implementations is as follows. In the foregoing two implementations, the SMF sends the indication message. In this implementation, the network platform sends the indication message. After the terminal receives the indication message, if the terminal has established the PDU session associated with the slice identifier, the terminal can directly use the PDU session associated with the slice identifier to access the application server. If the terminal has not established the PDU session associated with the slice identifier, the terminal establishes the PDU session associated with the slice identifier and used to access the application server, such that the PDU session is associated with the target slice.

In other words, if the indication message is the application trigger message, the method further includes one of the following operations.

If a session associated with the slice identifier has not been established, the PDU session establishment procedure is initiated to establish the PDU session associated with the slice identifier and used to access the application server.

If the session associated with the slice identifier has been established, the PDU session associated with the slice identifier is used to access the application server.

In a specific implementation, if the PDU session associated with the slice identifier has not been established and the application server needs to be accessed based on the slice identifier, it is required to establish the PDU session associated with the slice identifier. In this case, the PDU session establishment procedure is initiated to establish the PDU session associated with the slice identifier and used to access the application server.

If the session associated with the slice identifier has been established, the terminal does not need to re-establish the PDU session. The terminal can directly use the PDU session associated with the slice identifier to access the application server.

In the embodiments of the invention, the network side indicates the terminal to access the application through the target slice corresponding to the slice identifier by carrying the slice identifier in the indication message sent to the terminal.

The embodiments of the invention differ from the solution in the related art as follows. In the related art, before the PDU session is established, the terminal needs to match a URSP based on a service descriptor and find an identifier of a slice through which the network provides services for the application. When the PDU session is established, the UE carries session information (also referred to as session parameters) and the identifier of the slice to establish the PDU session. In this way, after the PDU session is successfully established, the PDU session established by the UE uses resources of the slice, and the slice provides quality assurance.

In the technical solution of the invention, the UE directly establishes the PDU session, and then associates the PDU session with the correct slice as indicated by the network side. The correct slice is determined by the network side. This resolves the problem in the related art that it is difficult for the terminal to match, based on the route/slice selection policy delivered by the network side, the corresponding slice for the service flow related to the application.

In actual application, it is determined whether the SMF corresponding to the PDU session before switching supports the target slice, to determine whether the terminal modifies or re-establishes the PDU session or initiates the PDU session establishment procedure, which specifically includes the following three cases.

### First Case

The network-side device is the SMF. If the SMF supports the target slice corresponding to the slice identifier, the indication message is the session modification command message or the session release command message.

In this implementation, the PDU session is modified or re-established such that the terminal updates the session to the slice corresponding to the slice identifier supported by the SMF.

### Second Case

The network-side device is the SMF. If the SMF does not support the target slice corresponding to the slice identifier, the PDU session may be re-established.

The original PDU session is released and a PDU session corresponding to the slice identifier is established by re-establishing the PDU session, such that the terminal can update the session to the established PDU session.

### Third Case

The network-side device is the network platform capable of sending a notification message to the terminal. The network platform is capable of sending the application trigger message to the terminal. The application trigger message indicates the terminal to access the application server by using the PDU session associated with the slice identifier. If the PDU session associated with the slice identifier has not been established, the terminal establishes a new PDU session associated with the slice identifier and accesses the application server by using the new PDU session.

In addition, when the new PDU session is established, the original PDU session is retained and the new PDU session corresponding to the slice identifier is established.

In the embodiments of the invention, after establishing the PDU session, the terminal receives the indication message from the network-side device. The indication message includes the slice identifier and indicates the terminal to modify or re-establish the PDU session or initiate the PDU session establishment procedure based on the slice identifier. In this way, the terminal only needs to modify or re-establish the PDU session or establish a new PDU session based on the slice identifier indicated by the network-side device, such that the PDU session can be switched to the specified slice, and the problem that it is difficult for the UE to select the slice based on the URSP when the UE establishes the session is resolved.

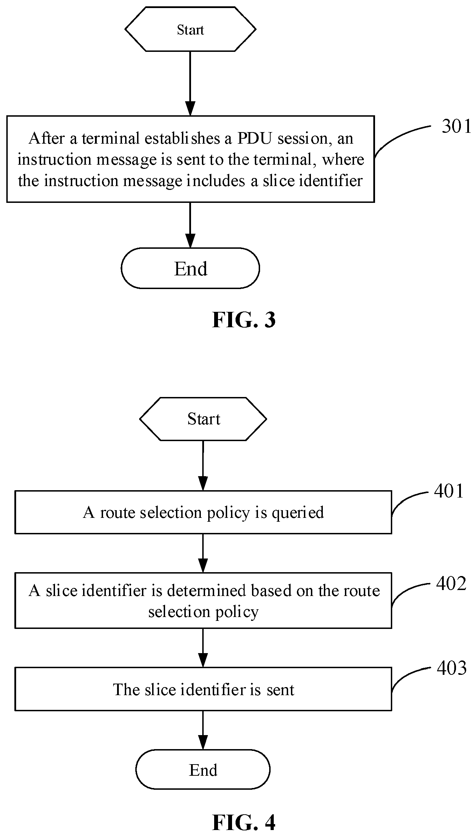

FIG. 3 is a flowchart of a second method for updating a session according to an embodiment of the invention. The method for updating a session is applied to a network-side device. As shown in FIG. 3, the method for updating a session includes the following operations.

In 301, after a terminal establishes a PDU session, an indication message is sent to the terminal. The indication message includes a slice identifier and indicates the terminal to modify or re-establish the PDU session or initiate a PDU session establishment procedure based on the slice identifier.

The indication message has a same meaning as the indication message in the method embodiment shown in FIG. 2. Details are not described herein again.

Further, when a DNN of the PDU session needs to be modified, the indication message further includes a DNN.

Further, the network-side device is a network platform or an SMF that manages the PDU session.

Further, the indication message includes at least one of: a session modification command message sent by the SMF, a session release command message sent by the SMF, or an application trigger message sent by the network platform.

The session modification command message indicates the terminal to replace a slice identifier associated with the PDU session with the slice identifier included in the session modification command message.

The session release command message indicates the terminal to release the session and re-establish the session based the slice identifier.

The application trigger message indicates the terminal to access an application server by using a PDU session associated with the slice identifier.

### First Case

The session modification command message indicates the terminal to change a slice network for the PDU session, such that the terminal accesses an application platform on the changed slice network.

### Second Case

The session release command message indicates the terminal to release the current PDU session and re-establish a session associated with the slice identifier.

In a specific implementation, the session release command message sent by the SMF to the terminal may carry a cause value. The cause value is used to indicate the terminal to re-establish the PDU session. The re-established PDU session is associated with the slice identifier.

In this way, the terminal can access the application platform by using the re-established PDU session.

### Third Case

The application trigger message indicates the terminal to access the application server by using the PDU session associated with the slice identifier.

Different from the second case in which the SMF sends the session release command message to the terminal, in the third case, when receiving the application trigger message, the terminal determines whether the current PDU session is associated with the slice identifier. If the current PDU session is associated with the slice identifier, the terminal may access the application platform by using the PDU session. If the current PDU session is not associated with the slice identifier, the terminal may establish a new PDU session associated with the slice identifier and access the application platform by using the new PDU session. The original PDU session is retained.

In an optional implementation, if the network-side device is the SMF and the SMF does not support the slice identifier, the indication message is the session release command message.

If the network-side device is the SMF and the SMF supports the slice identifier, the indication message is the session modification command message or the session release command message.

If the SMF does not support the slice identifier, the terminal is indicated through the session release command message to re-establish a session on another SMF that supports the slice identifier, to access the application server by using the session. In this case, the session on the original SMF is released to save network resources.

If the SMF supports the slice identifier, the session is updated to the slice identifier through the session modification command message, or the session is re-established on the same SMF through the session release command message, to access the application server by using the session.

In a first implementation, the network-side device is the SMF. Before the indication message is sent to the terminal, the method further includes the following operation.

A first session control message sent by a PCF is received. The first session control message carries a slice identifier determined based on a route selection policy. In other words, the first session control message sent by the PCF after the PCF determines that the PDU session needs to be associated with slice selection assistance information is received. The first session control message carries the slice identifier with which the PDU session needs to be associated.

In a specific implementation, the PCF can obtain information related to an application and/or information related to a user (for example, application information, session information, and UE information) and the like, to query a route selection policy based on the information and determine the slice identifier with which the PDU session needs to be associated.

In addition, the first session control message may further carry the information related to the application and/or the information related to the user, such that the SMF determines, based on the information and the slice identifier, whether to modify or re-establish the PDU session or establish a new PDU session.

In a second implementation, the network-side device is the SMF. Before the indication message is sent to the terminal, the method further includes the following operations.

A first service request sent by a network exposure function (NEF) or an application function (AF) is received. The first service request carries information related to an application and/or information related to a user.

After it is detected based on the first service request that the terminal accesses the application, a first request message is sent to a PCF. The first request message indicates the PCF to query a route selection policy.

A response message sent by the PCF is received. The response message carries a slice identifier determined based on the route selection policy.

In a specific implementation, the first service request may carry a query parameter. The query parameter may include at least one of the information related to the application or the information related to the user, and may further include information about the session established by the terminal.

The first service request sent by the NEF or the AF is received. The first service request carries the information related to the application (for example, an address of the application, which may also be referred to as application information) or the information related to the user (which may also be referred to as UE information). When receiving the first service request, the SMF sends the first request message to the PCF to request the PCF to obtain the slice identifier with which the PDU session needs to be associated.

After it is detected based on the first service request that the terminal accesses the application, the first request message is sent to the PCF. The first request message indicates the PCF to query the route selection policy. The first request message may carry the application information and the UE information. Specifically, the information related to the application may include the address of the application and/or an identifier of the application. The information related to the user may include an address of the user and/or an identifier of the user.

In other words, the query parameters carried in the first request message sent by the SMF to request the PCF to query the route selection policy are session parameters. The session parameters may include at least one of: application information corresponding to the PDU session, server information corresponding to the PDU session, or terminal identifier information corresponding to the PDU session.

After receiving the request message, the PCF queries the route selection policy, determines the slice identifier with which the PDU session needs to be associated, carries the queried slice identifier in the response message, and sends the response message to the SMF.

In a specific implementation, the response message may further include a DNN.

In other words, when the PDU session needs to be associated with the DNN, the SMF may indicate, based on the response message, the terminal to associate the PDU session associated with the slice identifier with the DNN.

Further, the response message is a second session control message.

In a specific implementation, the SMF may determine, based on the first session control message or the second session control message, to modify or re-establish the PDU session or establish a new PDU session.

In this implementation, the SMF can actively trigger modification or re-establishment of the PDU session or establishment of a new PDU session based on the first service request sent by the NEF or the AF, and actively search for the slice identifier from the PCF.

In a third implementation, the network-side device is the network platform. Before the indication message is sent to the terminal, the method further includes the following operation.

A service message (which may also be referred to as a service notification message) sent by an AF or a NEF is received. The service message carries a slice identifier with which a PDU session used to access an application server needs to be associated.

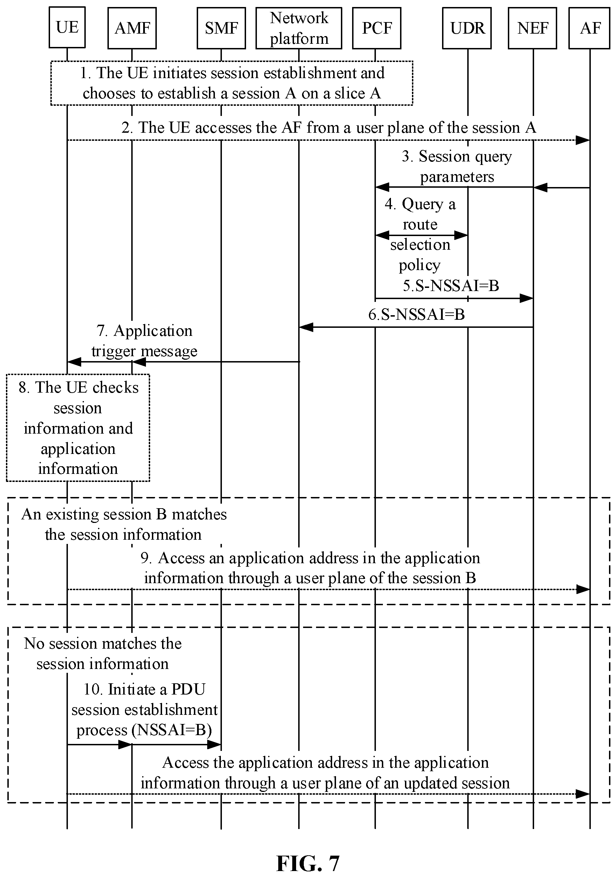

In a specific implementation, the operation that the service message sent by the AF or the NEF is received, where the service message carries the slice identifier with which the PDU session used to access the application server needs to be associated may be implemented as follows. After UE establishes a PDU session, when the UE accesses the application server by using the PDU session, the NEF or the AF triggers, based on the action, the PCF to query the route selection policy to determine the slice identifier with which the PDU session used to access the application server needs to be associated, and sends the slice identifier to the UE. For details, a reference is made to a process in the embodiment shown in FIG. 7.

The service message further includes a DNN.

In this implementation, the AF initiates a new PDU session establishment procedure. When the AF initiates the new PDU session establishment procedure, the network platform (for example, a short message service center (SMSC)) sends an indication to the UE to establish a new PDU session based on the session information. The UE checks whether a PDU session based on the session information already exists. If the PDU session based on the session information already exists, no new PDU session needs to be established. If no PDU session based on the session information exists, a new PDU session is established based on the session information.

FIG. 4 is a flowchart of a third method for updating a session according to an embodiment not being part of the invention. The method for updating a session is applied to a PCF. As shown in FIG. 4, the method for updating a session includes the following operations.

In 401, a route selection policy is queried.

In 402, a slice identifier is determined based on the route selection policy.

In 403, the slice identifier is sent.

In a specific implementation, the slice identifier is used by a terminal to modify or re-establish an established PDU session or initiate a PDU session establishment procedure.

Specifically, the PCF can determine a slice identifier that corresponds to a service platform corresponding to the PDU session based on the route selection policy and a query parameter (information related to an application and/or information related to a user) corresponding to the PDU session established by the terminal.

In an optional implementation, the method for updating a session further includes the following operation.

After the slice identifier is determined based on the route selection policy, a DNN is sent.

In a specific implementation, the PCF may send the DNN to a network-side device, such that the network-side device indicates the terminal to update a DNN associated with the PDU session.

In an optional implementation, before the route selection policy is queried, the method further includes the following operation.

A request message sent by an SMF, an AF, or a NEF is received. The request message carries the information related to the application and/or the information related to the user used to query the route selection policy.

The operation that the slice identifier is sent may include one of the following operations.

The slice identifier determined based on the route selection policy is sent to the SMF.

Alternatively, the slice identifier determined based on the route selection policy is sent to the NEF or the AF.

In an implementation, when receiving a first service request sent by the AF or the NEF, the SMF can send a first request message to the PCF to actively request the PCF to query the route selection policy based on at least one of the information related to the application or the information related to the user, and send the slice identifier obtained by querying the route selection policy to at least one of the SMF, the AF, or the NEF.

Specifically, when the slice identifier is sent to the SMF, the SMF indicates, based on whether the SMF supports a slice corresponding to the slice identifier, the terminal to modify or re-establish the session.

When the slice identifier is sent to the AF or the NEF, the AF or the NEF can notify the terminal of the slice identifier through a network platform capable of sending a notification message to the terminal, to indicate the terminal to access the application by using a session associated with the slice identifier. If the terminal has not established the session associated with the slice identifier, the terminal is enabled to initiate a session establishment procedure to establish the session associated with the slice identifier and access the application by using the established session.

In another implementation, the PCF can receive a request message sent by the AF or the NEF, to actively query the route selection policy based on the information related to the application and/or the information related to the user carried in the request message, and send the slice identifier obtained by querying the route selection policy to at least one of the SMF, the AF, or the NEF.

In other words, the slice identifier is obtained by the SMF that manages the PDU session or is actively sent to the SMF. The SMF indicates the terminal to update the session, such as modifying or re-establishing the session or initiating the session establishment procedure. Alternatively, the slice identifier is sent to the terminal through the network platform capable of sending a notification message to the terminal, to notify the terminal to access an application server through the slice identifier, such that the terminal determines whether a new PDU session needs to be established based on the slice identifier.

In an implementation, the slice identifier may be determined by the PCF based on a route selection policy locally or in a unified data repository (UDR).

For example, the information related to the application and/or the information related to the user is sent by the AF or the NEF. The slice identifier is sent to the SMF that manages the PDU session.

This implementation may correspond to an embodiment in which the network-side device is the SMF and the PCF actively queries the route selection policy, for example, operations 3 and 4 in the embodiment shown in FIG. 5.

Alternatively, the information related to the application and/or the information related to the user is sent by the SMF that manages the PDU session. The slice identifier is sent to the SMF.

This implementation may correspond to an embodiment in which the network-side device is the SMF and the SMF actively triggers the PCF to query the route selection policy, for example, operations 4 and 5 in the embodiment shown in FIG. 6. Details are not described herein.

Alternatively, the information related to the application and/or the information related to the user is sent by the AF or the NEF. The slice identifier is sent to the AF or the NEF.

This implementation may correspond to an embodiment in which the network-side device is the network platform and the AF or the NEF actively triggers the PCF to query the route selection policy, for example, operations 3, 4, and 5 in the embodiment shown in FIG. 7. Details are not described herein.

In the embodiments of the invention, the slice identifier with which the PDU session established by the terminal needs to be associated is determined by the PCF based on the information related to the application and/or the information related to the user (the query parameter), such that the network-side device indicates the terminal to update the session based on the slice identifier. A problem that it is difficult for the terminal to select a specified slice to establish the PDU session when the terminal establishes the PDU session can be resolved.

To facilitate the understanding of the method for updating a session provided in the embodiments of the invention, the method for updating a session is described below with reference to a process of data interaction between the terminal and the network-side device.

### First Embodiment

The network-side device is an SMF that manages a PDU session, and the SMF can receive an indication message sent by a PCF. A session update procedure is shown in FIG. 5, which may include the following operations.
1. UE initiates a session establishment procedure and chooses to establish a session A on a slice A.
   The slice A may be any slice network. The UE may select the slice A through a random selection or by fixedly selecting a same slice network for different sessions. In addition, the session A is a PDU session A (with S-NSSAI=A).
2. The UE accesses an application platform, namely, an AF, from a user plane of the session A.
3. A NEF or the AF sends a first service request to the PCF.

In this operation, after detecting that the UE uses an application service, the AF sends the first service request to the PCF through the NEF, such that the NEF can notify the PCF that the UE accesses the application platform and notify the PCF of UE information (for example, an IP address of the UE) and application information (for example, an address of an application and an ID of the application).

In a specific implementation, the AF may alternatively directly notify the PCF. This is not specifically limited herein.

4. The PCF sends a first session control message to an original SMF.

In this operation, the PCF can find, based on a binding relationship between the session of the UE and the UE information and a binding relationship between the session of the UE and the application information, a corresponding session and an SMF that manages the session, determines, based on a route selection policy, that the user needs to switch to a slice B, carries a slice identifier (namely, S-NSSAI=B), the application information, and the UE information in the first session control message, and sends the first session control message to the SMF that manages the session of the UE.

In this operation, when the route selection policy is in a UDR, the PCF responsible for session policy control may query the route selection policy from the UDR.

5. The SMF determines, based on the first session control message, whether the SMF supports the slice B.

If yes, operation 6 is performed. If no, operation 7 is performed.

6. The SMF updates a session context and sends a session modification command message to the UE to initiate session modification and update the session, such that the session is associated with S-NSSAI=B.

In this operation, the terminal modifies information about the PDU session based on the session modification command message sent by the SMF, to update the slice associated with the PDU session.

7. The SMF sends a session release command message carrying S-NSSAI=B to the UE to indicate the UE to initiate session re-establishment.

In this operation, the SMF may send the session release command message to the UE. The session release command message carries S-NSSAI=B, which indicates that the S-NSSAI of the session needs to be updated to B. The indication message may not carry other session information. The other session information (for example, a session type, a DNN, and an IP address) is unchanged by default.

It should be noted that the terminal may release the original PDU session A after receiving the session release command message from the SMF.

In addition, after releasing the original PDU session, the UE further requests to re-establish the PDU session on the slice with S-NSSAI=B. The PDU session is managed by an SMF supporting the slice with S-NSSAI=B.

In a specific implementation, a session modification command message may be used as the indication message to carry the foregoing session information.

8. The UE modifies or re-establishes the session as indicated by the SMF, and switches the PDU session used to access the specified application to the slice B (namely, S-NSSAI=B).

In this operation, after the session is modified or re-established, the UE accesses the application platform from a user plane corresponding to the modified or re-established session.

In this embodiment, the PCF initiates the modification or re-establishment of the PDU session, and after determining to modify or re-establish the PDU session, the PCF indicates, through the SMF that manages the original PDU session, the UE to modify or re-establish the PDU session.

In a specific implementation of the invention, the indication message may be a new session establishment command message sent by the SMF that manages the PDU session. The session release command message indicates the terminal to establish a new session based on the slice identifier.

### Second Embodiment

The network-side device is an SMF that manages a PDU session, and the SMF can actively search for a target slice from a PCF when obtaining that a terminal uses an application service. A session update procedure is shown in FIG. 6, which may include the following operations.
1. UE initiates session establishment and chooses to establish a session A on a slice A.
   The slice A may be any slice network, as in the embodiment shown in FIG. 5.
2. The UE accesses an AF from a user plane of the session A.
3. A NEF or the AF sends a first service request to an SMF that manages the session.
   The first service request has a same meaning as the first service request in the embodiment shown in FIG. 5. Details are not described herein again.
4. The SMF sends a request message to the PCF.
   In this operation, the request message may carry UE information (for example, an IP address of the UE) and application information (for example, an address of an application and an ID of the application), or may further carry a query parameter (information related to the application and/or information related to a user), such as session information, to request the PCF to query a route selection policy of the user based on the query parameter.
5. The PCF sends a response message to the SMF.

The response message is specifically a response message to the request message. The response message carries a slice identifier that is determined based on the session query parameter and with which the PDU session needs to be associated.

In addition, when the route selection policy is in a UDR, the PCF responsible for session policy control may query the route selection policy from the UDR.

In this operation, the PCF determines that the user needs to switch to a slice B based on the route selection policy, and delivers session information (with S-NSSAI=B) to the SMF that manages the session of the UE (namely, the SMF that manages the session A).

6. The SMF determines whether the SMF supports the slice B.

If yes, operation 7 is performed. If no, operation 8 is performed.

7. The SMF updates a session context and sends a session modification command message to the UE to initiate session modification and update the session, such that the session is associated with S-NSSAI=B.

8. The SMF sends a session release command message carrying S-NSSAI=B to the UE to indicate the UE to initiate session re-establishment.

This operation is the same as operation 7 in the embodiment shown in FIG. 5. Details are not described herein again.

9. The UE modifies or re-establishes the session as indicated by the SMF, and switches the PDU session used to access a specified application to the slice B (namely, S-NSSAI=B).

In this embodiment, the SMF initiates the modification or re-establishment of the PDU session, and searches for the route selection policy from the PCF in the procedure of initiating the modification or re-establishment of the PDU session to determine the slice B, so as to indicate the terminal to modify or re-establish the PDU session.

In a specific implementation of the invention, the indication message may be a new session establishment command message sent by the SMF that manages the PDU session. The session release command message indicates the terminal to establish a new session based on the slice identifier.

### Third Embodiment

The network-side device is a network platform. The network platform may indicate a terminal to establish a new PDU session. Specifically, a session update procedure is shown in FIG. 7, which may include the following operations.
1. UE initiates session establishment and chooses to establish a session A on a slice A.
2. The UE accesses an AF from a user plane of the session A.
3. A NEF or the AF sends a query parameter to a PCF.
4. The PCF queries a route selection policy based on the query parameter.
   In a specific implementation, when the route selection policy is in a UDR, the PCF responsible for session policy control may query the route selection policy from the UDR.
5. The PCF returns a corresponding slice identifier to the AF or the NEF.
   The PCF returns a slice identifier of a slice B (namely, S-NSSAI=B) to the AF or the NEF. In addition, the PCF may further return UE information and application information to the AF or the NEF.
6. The AF or the NEF sends a service notification message to the network platform.

The network platform is specifically a network platform that can send a notification to the UE. The service notification message carries the slice identifier (S-NSSAI=B) with which the PDU session used to access an application server needs to be associated.

In this operation, the service notification message may further carry the UE information and the application information and be sent to the network platform that can send a notification to the UE.

7. The network platform sends an application trigger message to the UE.

The application trigger message indicates the terminal to access the application server by using the PDU session associated with the slice identifier.

8. The UE checks whether a PDU session has been established based on the session information.

If a PDU session has been established based on the session information, operation 8 is performed. If no PDU session has been established based on the session information, operation 9 is performed.

9. The application server is accessed by using the PDU session.

10. A new PDU session establishment procedure is initiated as indicated by a network entity, and the application server is accessed by using the new PDU session established through the procedure.

In this embodiment, the AF initiates the new PDU session establishment procedure. When the AF initiates the new PDU session establishment procedure, an indication is sent to the UE through the network platform (for example, an SMSC) to indicate the UE to establish a new PDU session based on the session information. The UE checks whether a PDU session based on the session information already exists. If a PDU session based on the session information already exists, no new PDU session needs to be established. If no PDU session based on the session information exists, a new PDU session is established based on the session information.

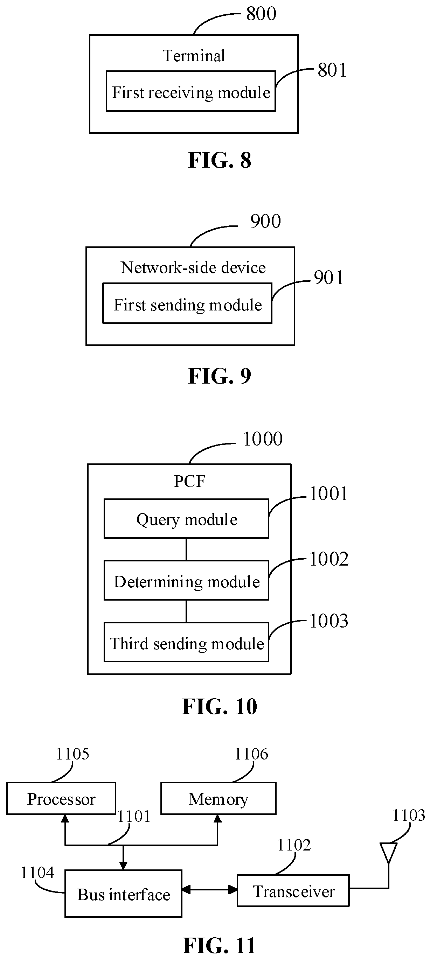

FIG. 8 is a schematic structural diagram of a terminal according to an embodiment of the invention. As shown in FIG. 8, a terminal 800 includes a first receiving module 801.

The first receiving module 801 is configured to: after a PDU session is established, receive an indication message from a network-side device. The indication message includes a slice identifier and indicates the terminal to modify or re-establish the PDU session or initiate a PDU session establishment procedure based on the slice identifier.

The indication message further includes a DNN.

Further, the indication message includes at least one of: a session modification command message sent by an SMF that manages the PDU session, a session release command message sent by the SMF that manages the PDU session, or an application trigger message sent by a network platform.

The session modification command message indicates the terminal to replace a slice identifier associated with the PDU session with the slice identifier included in the session modification command message.

The session release command message indicates the terminal to release the session and re-establish the session based on the slice identifier.

The application trigger message indicates the terminal to access an application server by using a PDU session associated with the slice identifier.

Further, when the indication message is the application trigger message, the terminal 800 further includes an establishment module or an access module.

The establishment module is configured to: if the PDU session associated with the slice identifier has not been established, initiate the PDU session establishment procedure to establish the PDU session associated with the slice identifier and used to access the application server.

The access module is configured to: if the PDU session associated with the slice identifier has been established, access the application server by using the PDU session associated with the slice identifier.

The terminal in this embodiment of the invention can receive the indication message sent by the network-side device and determine, based on the slice identifier specified by the network-side device, slice information corresponding to the session, to modify or re-establish the session or initiate the session establishment procedure based on the slice information. This resolves a problem that it is difficult for the terminal to select a slice corresponding to a PDU session when the terminal establishes the session.

FIG. 9 is a schematic structural diagram of a network-side device according to an embodiment of the invention. As shown in FIG. 9, a network-side device 900 includes a first sending module 901.

The first sending module 901 is configured to: after a terminal establishes a PDU session, send an indication message to the terminal. The indication message includes a slice identifier and indicates the terminal to modify or re-establish the PDU session or initiate a PDU session establishment procedure based on the slice identifier.

The indication message further includes a DNN.

Further, the network-side device is a network platform or an SMF that manages the PDU session.

Further, the indication message includes at least one of: a session modification command message sent by the SMF, a session release command message sent by the SMF, or an application trigger message sent by the network platform.

The session modification command message indicates the terminal to replace a slice identifier associated with the PDU session with the slice identifier included in the session modification command message.

The session release command message indicates the terminal to release the session and re-establish the session based the slice identifier.

The application trigger message indicates the terminal to access an application server by using a PDU session associated with the slice identifier.

Further, when the network-side device is the SMF and the SMF does not support the slice identifier, the indication message is the session release command message.

Alternatively, when the network-side device is the SMF and the SMF supports the slice identifier, the indication message is the session modification command message or the session release command message.

Further, the network-side device is the SMF. The network-side device 900 further includes a second receiving module configured to receive a first session control message from a PCF. The first session control message carries the slice identifier determined based on a route selection policy.

Further, the network-side device is the SMF. The network-side device 900 further includes a third receiving module, a second sending module and a fourth receiving module.

The third receiving module is configured to receive a first service request from a NEF or an AF. The first service request carries information related to an application and/or information related to a user.

The second sending module is configured to: after detecting that the terminal accesses the application based on the first service request, send a first request message to a PCF. The first request message indicates the PCF to query a route selection policy.

The fourth receiving module is configured to receive a response message from the PCF. The response message carries the slice identifier determined based on the route selection policy.

The response message further includes a DNN.

Further, the information related to the application includes an address of the application and/or an identifier of the application.

The information related to the user includes an address of the user and/or an identifier of the user.

Further, the response message is a second session control message.

Further, the network-side device is the network platform. The network-side device 900 further includes a fifth receiving module.

The fifth receiving module is configured to receive a service message from an AF or a NEF. The service message carries a slice identifier with which a PDU session used to access an application server needs to be associated.

The service message further includes a DNN.

The network-side device in the invention can send the indication message to the terminal to indicate the terminal to modify or re-establish the PDU session or initiate the session establishment procedure, such that the terminal updates the session based on the indication message. This resolves a problem that it is difficult for the terminal to select a slice corresponding to a PDU session when the terminal establishes the session.

FIG. 10 is a schematic structural diagram of a PCF according to an embodiment not being part of the invention. As shown in FIG. 10, the PCF 1000 includes the following modules.

A query module 1001 is configured to query a route selection policy.

A determining module 1002 is configured to determine a slice identifier based on the route selection policy.

A third sending module 1003 is configured to send the slice identifier.

Further, the slice identifier is used by a terminal to modify or re-establish an established PDU session or initiate a PDU session establishment procedure.

Further, the PCF further includes a fourth receiving module.

The fourth receiving module is configured to, before the route selection policy is queried, receive a request message from an SMF, an AF, or a NEF. The request message carries the information related to the application and/or the information related to the user used to query the route selection policy.

The third sending module 1003 is specifically configured to: send the slice identifier determined based on the route selection policy to the SMF; or send the slice identifier determined based on the route selection policy to the NEF or the AF.

The PCF further includes a fourth sending module.

The fourth sending module is configured to: after the slice identifier is determined based on the route selection policy, send a DNN.

The PCF 1000 in the invention can determine, based on a query parameter corresponding to the PDU session established by the terminal, the slice identifier with which the PDU session needs to be associated. This resolves a problem that it is difficult for the terminal to select a slice corresponding to a PDU session when the terminal establishes the session.

Referring to FIG. 11, the invention further provides an entity, including a bus 1101, a transceiver 1102, an antenna 1103, a bus interface 1104, a processor 1105, and a memory 1106.

In the invention, the entity is a network-side device. The entity includes the processor 1105 and the transceiver 1102.

The transceiver 1102 is configured to: after a terminal establishes a PDU session, send an indication message to the terminal. The indication message includes a slice identifier and indicates the terminal to modify or re-establish the PDU session or initiate a PDU session establishment procedure based on the slice identifier.

Further, when a DNN of the PDU session needs to be modified, the indication message further includes a DNN.

Further, the network-side device is a network platform or an SMF that manages the PDU session.

Further, the indication message includes at least one of: a session modification command message sent by the SMF, a session release command message sent by the SMF, or an application trigger message sent by the network platform.

The session modification command message indicates the terminal to replace a slice identifier associated with the PDU session with the slice identifier included in the session modification command message.

The session release command message indicates the terminal to release the session and re-establish the session based on the slice identifier.

The application trigger message indicates the terminal to access an application server by using a PDU session associated with the slice identifier.

Further, when the network-side device is the SMF and the SMF does not support the slice identifier, the indication message is the session release command message.

Alternatively, when the network-side device is the SMF and the SMF supports the slice identifier, the indication message is the session modification command message or the session release command message.

Further, the network-side device is the SMF. The transceiver 1102 is further configured to, before sending the indication message to the terminal, receive a first session control message from a PCF. The first session control message carries a slice identifier corresponding to the PDU session and determined based on a route selection policy.

Further, the network-side device is the SMF. The transceiver 1102 is further configured to perform the following operations before sending the indication message to the terminal.

A first service request sent by a NEF or an AF is received. The first service request carries information related to an application and/or information related to a user.

After it is detected based on the first service request that the terminal accesses the application, a first request message is sent to a PCF. The first request message indicates the PCF to query a route selection policy.

A response message is received from the PCF. The response message carries a slice identifier determined based on the route selection policy.

The response message further includes a DNN.

Further, the information related to the application includes an address of the application and/or an identifier of the application. The information related to the user includes an address of the user and/or an identifier of the user.

Further, the response message is a second session control message.

Further, the network-side device is the network platform. The transceiver 1102 is further configured to, before sending the indication message to the terminal, receive a service message from an AF or a NEF. The service message carries a slice identifier with which a PDU session used to access an application server needs to be associated.

The service message further includes a DNN.

The entity can implement each process implemented by the network-side device in the method embodiment shown in FIG. 6. To avoid repetition, details are not described herein again.

The entity can indicate the terminal to update the PDU session after the terminal establishes the session, such that the terminal modifies or re-establishes the session or initiates the session establishment procedure as indicated by the entity. This resolves a problem that it is difficult for the terminal to select a slice corresponding to a PDU session when the terminal establishes the session.

In an embodiment of the invention, the entity is a PCF. The entity includes the processor 1105 and the transceiver 1102.

The processor 1005 is configured to query a route selection policy.

The processor 1005 is further configured to determine a slice identifier based on the route selection policy.

The transceiver 1002 is configured to send the slice identifier.

Further, the slice identifier is used by a terminal to modify or re-establish an established PDU session or initiate a PDU session establishment procedure.

Further, before the route selection policy is queried, the transceiver 1002 is further configured to receive a request message from an SMF, an AF, or a NEF. The request message carries information related to an application and/or information related to a user used to query the route selection policy.

The transceiver 1002 is specifically configured to perform one of the following operations to send the slice identifier.

The slice identifier determined based on the route selection policy is sent to the SMF.

Alternatively, the slice identifier determined based on the route selection policy is sent to the NEF or the AF.

The transceiver 1102 is further configured to send a DNN after the slice identifier is determined based on the route selection policy.

The entity can implement each process implemented by the PCF in the method embodiment shown in FIG. 7. To avoid repetition, details are not described herein again.

The entity can determine the slice identifier, with which the PDU session established by the terminal needs to be associated, based on a received session query request after the terminal establishes the PDU session. Then, a network side may notify the terminal to modify or re-establish the session or initiate the session establishment procedure, to update the PDU session to be associated with the slice identifier. This resolves a problem that it is difficult for the terminal to select a slice corresponding to a PDU session when the terminal establishes the session.

In FIG. 11, a bus architecture is represented by the bus 1101. The bus 1101 may include any number of interconnected buses and bridges. The bus 1101 connects one or more processors represented by the processor 1105 to various circuits of memories represented by the memory 1106. The bus 1101 may also connect various other circuits such as peripheral devices, voltage regulators, and power management circuits. This is known in the art, and therefore is not further described in the invention. The bus interface 1104 provides an interface between the bus 1101 and the transceiver 1102. The transceiver 1102 may be one element, or may be a plurality of elements, such as a plurality of receivers and transmitters, providing a means for communicating with various other apparatuses over a transmission medium. Data processed by the processor 1105 is transmitted over a wireless medium through the antenna 1103. Further, the antenna 1103 receives data and transmits the data to the processor 1105.

The processor 1105 is responsible for managing the bus 1101 and general processing, and may further provide various functions, including timing, peripheral interfaces, voltage regulation, power management, and other control functions. The memory 1106 may be configured to store data used by the processor 1105 when operations are performed.

Optionally, the processor 1105 may be a central processing unit (CPU), an application-specific integrated circuit (ASIC), a field-programmable gate array (FPGA), or a complex programmable logic device (CPLD).

Optionally, the invention further provides a terminal, including a processor 1105, a memory 1106, and a computer program stored in the memory 1106 and capable of running on the processor 1105. The computer program, when executed by the processor 105, causes the processor to implement the processes of the method for updating a session in the embodiment shown in FIG. 2. The same technical effect can be achieved. To avoid repetition, details are not described herein again.

The invention further provides a computer-readable storage medium having stored thereon a computer program that, when executed by a processor, causes the processor to implement the processes of the method for updating a session in the embodiment shown in FIG. 2, FIG. 6, or FIG. 7. The same technical effect can be achieved. To avoid repetition, details are not described herein again.

The computer-readable storage medium may be a read-only memory (ROM), a random access memory (RAM), a magnetic disk, an optical disc, or the like.

It should be noted that terms "including", "comprising" or any other variants thereof are intended to cover non-exclusive inclusion such that a process, method, article, or apparatus including a series of elements includes not only those elements but also other elements not explicitly listed, or elements inherent to such a process, method, article, or apparatus. Without further limitation, an element qualified by the phrase "including a ..." does not exclude the presence of an additional identical element in the process, method, article, or apparatus including the element.

Those of ordinary skill in the art may be aware that units and algorithm steps in examples described with reference to the embodiments disclosed in this specification can be implemented by electronic hardware or a combination of computer software and electronic hardware. Whether these functions are implemented by hardware or software depends on specific applications of the technical solutions and design constraints. A person skilled in the art may use different methods to implement the described functions for each specific application, but such implementation should not be considered to be beyond the scope of the invention.

A person skilled in the art can clearly understand that for convenience and brevity of description, reference may be made to corresponding processes in the foregoing method embodiments for specific working processes of the foregoing systems, apparatuses, and units. Details are not described herein again.

In the embodiments provided in this application, it should be understood that the disclosed apparatus and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections implemented through some interfaces, apparatuses or units, and may be implemented in electrical, mechanical, or other forms.

The units described as separate parts may or may not be physically separate. Parts shown as units may or may not be physical units, which may be located in one position, or may be distributed on a plurality of network units. Some or all of the units may be selected according to actual requirements to achieve the objectives of the solutions in the embodiments.

In addition, functional units in the embodiments of the invention may be integrated into one processing unit, or each of the units may exist alone physically, or two or more units are integrated into one unit.

Through the foregoing description of the implementations, those skilled in the art can clearly understand that the foregoing method in the embodiments may be implemented by means of software and a necessary general-purpose hardware platform, and may also be implemented by means of hardware, but the former is a better implementation manner in many cases. Based on this understanding, the technical solutions of the invention essentially, or a part contributing to the related art, may be embodied in a form of a software product. The computer software product is stored in a storage medium (such as a ROM, a RAM, a magnetic disk, or an optical disc), and includes several instructions used to enable a terminal (which may be a mobile phone, a computer, a server, an air conditioner, or a network device) to perform the methods described in various embodiments of the invention.

It can be understood that the embodiments described in the invention can be implemented by hardware, software, firmware, middleware, microcode, or a combination thereof. For hardware implementation, a module, a unit, or a sub-unit may be implemented in one or more ASICs, digital signal processors (DSPs), DSP devices (DSPDs), programmable logic devices (PLDs), FPGAs, general-purpose processors, controllers, microcontrollers, microprocessors, other electronic units configured to perform the functions described in the invention, or a combination thereof.

For software implementation, a technology described in the embodiments of the invention may be implemented through modules (such as procedures or functions) that perform the functions described in the embodiments of the invention. Software code may be stored in a memory and run by a processor. The memory may be implemented inside or outside the processor.

The embodiments of the invention have been described above with reference to the accompanying drawings. The foregoing specific embodiments are only illustrative and not restrictive. The scope of protection of the invention shall be subject to the scope of protection of the claims.

## Claims

1. A method for updating a session, executed by user equipment, UE, and comprising:
establishing a first protocol data unit, PDU, session on a network slice selected by the UE; and
after establishment of the first PDU session is completed, receiving (201) an indication message from a network entity, wherein the indication message comprises single network slice selection assistance information, S-NSSAI, and the network entity is a session management function, SMF, that manages the first PDU session,
wherein the indication message is a session modification command message or a session release command message in response to the SMF supporting the S-NSSAI, the session modification command message indicates the UE to replace an S-NSSAI associated with the first PDU session with the S-NSSAI comprised in the session modification command message, and the session release command message indicates the UE to release the first PDU session and re-establish a new PDU session on a same SMF according to the S-NSSAI; or
wherein the indication message is the session release command message in response to the SMF not supporting the S-NSSAI, and the session release command message indicates the UE to release the first PDU session and re-establish the new PDU session on another SMF that supports the S-NSSAI.

2. The method for updating a session of claim 1, wherein the indication message further comprises a data network name, DNN.

3. The method for updating a session of claim 1, wherein the indication message further comprises:
an application trigger message sent by a network platform, wherein the application trigger message indicates the UE to access an application server by using a second PDU session associated with the S-NSSAI.

4. The method for updating a session of claim 3, wherein in response to the indication message being the application trigger message, the method further comprises:
when the second PDU session associated with the S-NSSAI has not been established, initiating a PDU session establishment procedure to establish the second PDU session associated with the S-NSSAI and used to access the application server;
or
when the second PDU session associated with the S-NSSAI has been established, accessing the application server by using the second PDU session associated with the S-NSSAI.

5. A method for updating a session, executed by a network entity and comprising:
after user equipment, UE, has established a first protocol data unit, PDU, session on a network slice selected by the UE and when the network entity learns that the first PDU session established by the UE does not match a service flow that needs to be selected to a specified slice, sending (301) an indication message to the UE, wherein the indication message comprises single network slice selection assistance information, S-NSSAI, and the network entity is a session management function, SMF, that manages the first PDU session,
wherein in response to the SMF supporting the S-NSSAI, the indication message is a session modification command message or a session release command message, the session modification command message indicates the UE to replace an S-NSSAI associated with the first PDU session with the S-NSSAI comprised in the session modification command message, and the session release command message indicates the UE to release the first PDU session and re-establish a new PDU session on a same SMF according to the S-NSSAI; or
wherein in response to the SMF not supporting the S-NSSAI, the indication message is the session release command message, and the session release command message indicates the UE to release the first PDU session and re-establish the new PDU session on another SMF that supports the S-NSSAI.

6. The method for updating a session of claim 5, wherein the indication message further comprises a data network name, DNN.

7. The method for updating a session of claim 5, wherein the indication message further comprises:
an application trigger message sent by a network platform, wherein the application trigger message indicates the UE to access an application server by using a second PDU session associated with the S-NSSAI.

8. The method for updating a session of claim 5, wherein the method further comprises:
before sending the indication message to the UE,
receiving a first session control message from a policy control function, PCF, wherein the first session control message carries the S-NSSAI determined according to a route selection policy.

9. The method for updating a session of claim 5, wherein the method further comprises:
before sending the indication message to the UE,
receiving a first service request from a network exposure function, NEF, or an application function, AF, wherein the first service request carries at least one of information related to an application or information related to a user;
after detecting, according to the first service request, that the UE accesses the application, sending a first request message to a PCF, wherein the first request message indicates the PCF to query a route selection policy; and
receiving a response message from the PCF, wherein the response message carries the S-NSSAI determined according to the route selection policy.

10. The method for updating a session of claim 5, wherein in response to the network entity being a network platform, the method further comprises:
before sending the indication message to the UE,
receiving a service message from an AF or a NEF, wherein the service message carries the S-NSSAI with which a second PDU session used to access an application server needs to be associated.

11. A user equipment, UE (800), comprising:
a receiving module (801), configured to: establish a first protocol data unit, PDU, session on a network slice selected by the UE; and after establishment of the first PDU session is completed, receive an indication message from a network entity, wherein the indication message comprises single network slice selection assistance information, S-NSSAI, and the network entity is a session management function, SMF, that manages the first PDU session,
wherein the indication message is a session modification command message or a session release command message in response to the SMF supporting the S-NSSAI, the session modification command message indicates the UE (800) to replace an S-NSSAI associated with the first PDU session with the S-NSSAI comprised in the session modification command message, and the session release command message indicates the UE (800) to release the first PDU session and re-establish a new PDU session on a same SMF according to the S-NSSAI; or
wherein the indication message is the session release command message in response to the SMF not supporting the S-NSSAI, and the session release command message indicates the UE (800) to release the first PDU session and re-establish the new PDU session on another SMF that supports the S-NSSAI.

12. A network entity, comprising:
a first sending module (901), configured to: after user equipment, UE, has established a first protocol data unit, PDU, session on a network slice selected by the UE and when the network entity learns that the first PDU session established by the UE does not match a service flow that needs to be selected to a specified slice, send an indication message to the UE, wherein the indication message comprises single network slice selection assistance information, S-NSSAI, and the network entity is a session management function, SMF, that manages the first PDU session,
wherein in response to the SMF supporting the S-NSSAI, the indication message is a session modification command message or a session release command message, the session modification command message indicates the UE to replace an S-NSSAI associated with the first PDU session with the S-NSSAI comprised in the session modification command message, and the session release command message indicates the UE to release the first PDU session and re-establish a new PDU session on a same SMF according to the S-NSSAI; or
wherein in response to the SMF not supporting the S-NSSAI, the indication message is the session release command message, and the session release command message indicates the UE to release the first PDU session and re-establish the new PDU session on another SMF that supports the S-NSSAI.

## Patentansprüche

1. Verfahren zum Aktualisieren einer Sitzung, ausgeführt von einem Benutzergerät, UE, und umfassend:
Herstellen einer Sitzung einer ersten Protokolldateneinheit, PDU, auf einem Teilnetz, das von dem UE ausgewählt ist; und
nachdem die Herstellung der ersten PDU-Sitzung abgeschlossen wurde, Empfangen (201) einer Hinweisnachricht von einer Netzinstanz, wobei die Hinweisnachricht eine einzelne Teilnetzauswahl-Unterstützungsinformation, S-NSSAI, umfasst und die Netzinstanz eine Sitzungsverwaltungsfunktion, SMF, ist, die die erste PDU-Sitzung verwaltet,
wobei die Hinweisnachricht eine Sitzungsänderungsbefehl-Nachricht oder eine Sitzungsfreigabebefehl-Nachricht als Reaktion auf die SMF ist, die die S-NSSAI unterstützt, die Sitzungsänderungsbefehl-Nachricht dem UE angibt, eine S-NSSAI, die mit der ersten PDU-Sitzung assoziiert ist, durch die S-NSSAI zu ersetzen, die in der Sitzungsänderungsbefehl-Nachricht enthalten ist, und die Sitzungsfreigabebefehl-Nachricht dem UE angibt, die erste PDU-Sitzung freizugeben und eine neue PDU-Sitzung auf derselben SMF gemäß der S-NSSAI wiederherzustellen; oder
wobei die Hinweisnachricht die Sitzungsfreigabebefehl-Nachricht als Reaktion darauf ist, dass die SMF die S-NSSAI nicht unterstützt, und die Sitzungsfreigabebefehl-Nachricht dem UE angibt, die erste PDU-Sitzung freizugeben und die neue PDU-Sitzung auf einer anderen SMF, die die S-NSSAI unterstützt, wiederherzustellen.

2. Verfahren zum Aktualisieren einer Sitzung nach Anspruch 1, wobei die Hinweisnachricht ferner einen Datennetznamen, DNN, umfasst.

3. Verfahren zum Aktualisieren einer Sitzung nach Anspruch 1, wobei die Hinweisnachricht ferner Folgendes umfasst:
eine Anwendungsauslösernachricht, die von einer Netzplattform gesendet wird, wobei die Anwendungsauslösernachricht dem UE angibt, auf einen Anwendungsserver zuzugreifen, indem es eine zweite PDU-Sitzung verwendet, die mit der S-NSSAI assoziiert ist.

4. Verfahren zum Aktualisieren einer Sitzung nach Anspruch 3, wobei das Verfahren als Reaktion darauf, dass die Hinweisnachricht die Anwendungsauslösernachricht ist, ferner Folgendes umfasst:
wenn die zweite PDU-Sitzung, die mit der S-NSSAI assoziiert ist, noch nicht hergestellt wurde, Einleiten eines PDU-Sitzung-Herstellungsablaufs, um die zweite PDU-Sitzung herzustellen, die mit der S-NSSAI assoziiert ist und zum Zugreifen auf den Anwendungsserver verwendet wird;
oder
wenn die zweite PDU-Sitzung, die mit der S-NSSAI assoziiert ist, hergestellt wurde, Zugreifen auf den Anwendungsserver unter Verwendung der zweiten PDU-Sitzung, die mit der S-NSSAI assoziiert ist.

5. Verfahren zum Aktualisieren einer Sitzung, das von einer Netzinstanz ausgeführt wird und Folgendes umfasst:
nachdem ein Benutzergerät, UE, eine erste Sitzung einer Protokolldateneinheit, PDU, in einem Teilnetz, das von dem UE ausgewählt wird, hergestellt hat, und wenn die Netzinstanz erfährt, dass die von dem UE hergestellte erste PDU-Sitzung nicht mit einem Dienstfluss übereinstimmt, der für ein bestimmtes Teilnetz ausgewählt werden muss, Senden (301) einer Hinweisnachricht an das UE, wobei die Hinweisnachricht eine einzelne Teilnetzauswahl-Unterstützungsinformation, S-NSSAI, umfasst und die Netzinstanz eine Sitzungsverwaltungsfunktion, SMF, ist, die die erste PDU-Sitzung verwaltet,
wobei als Antwort auf die SMF, die die S-NSSAI unterstützt, die Hinweisnachricht eine Sitzungsänderungsbefehl-Nachricht oder eine Sitzungsfreigabebefehl-Nachricht ist, die Sitzungsänderungsbefehl-Nachricht dem UE angibt, eine S-NSSAI, die mit der ersten PDU-Sitzung assoziiert ist, durch die S-NSSAI zu ersetzen, die in der Sitzungsänderungsbefehl-Nachricht enthalten ist, und die Sitzungsfreigabebefehl-Nachricht dem UE angibt, die erste PDU-Sitzung freizugeben und eine neue PDU-Sitzung auf derselben SMF gemäß der S-NSSAI wiederherzustellen; oder
wobei als Reaktion darauf, dass die SMF die S-NSSAI nicht unterstützt, die Hinweisnachricht die Sitzungsfreigabebefehl-Nachricht ist, und die Sitzungsfreigabebefehl-Nachricht dem UE angibt, die erste PDU-Sitzung freizugeben und die neue PDU-Sitzung auf einer anderen SMF, die die S-NSSAI unterstützt, wiederherzustellen.

6. Verfahren zum Aktualisieren einer Sitzung nach Anspruch 5, wobei die Hinweisnachricht ferner einen Datennetznamen, DNN, umfasst.

7. Verfahren zum Aktualisieren einer Sitzung nach Anspruch 5, wobei die Hinweisnachricht ferner Folgendes umfasst:
eine Anwendungsauslösernachricht, die von einer Netzplattform gesendet wird, wobei die Anwendungsauslösernachricht dem UE angibt, auf einen Anwendungsserver zuzugreifen, indem es eine zweite PDU-Sitzung verwendet, die mit der S-NSSAI assoziiert ist.

8. Verfahren zum Aktualisieren einer Sitzung nach Anspruch 5, wobei das Verfahren ferner Folgendes umfasst:
vor Senden der Hinweisnachricht an das UE, Empfangen einer ersten Sitzungssteuerungsnachricht von einer Richtliniensteuerungsfunktion, PCF, wobei die erste Sitzungssteuerungsnachricht die S-NSSAI enthält, die gemäß einer Routenauswahlrichtlinie bestimmt wird.

9. Verfahren zum Aktualisieren einer Sitzung nach Anspruch 5, wobei das Verfahren ferner Folgendes umfasst:
vor Senden der Hinweisnachricht an das UE,
Empfangen einer ersten Dienstanforderung von einer Netzaussetzungsfunktion, NEF, oder einer Anwendungsfunktion, AF, wobei die erste Dienstanforderung mindestens eines von Informationen, die sich auf eine Anwendung beziehen, oder Informationen, die sich auf einen Benutzer beziehen, enthält;
nach Erkennen, gemäß der ersten Dienstanforderung, dass das UE auf die Anwendung zugreift, Senden einer ersten Anforderungsnachricht an eine PCF, wobei die erste Anforderungsnachricht der PCF angibt, eine Routenauswahlrichtlinie abzufragen; und
Empfangen einer Antwortnachricht von der PCF, wobei die Antwortnachricht die S-NSSAI enthält, die gemäß der Routenauswahlrichtlinie bestimmt wird.

10. Verfahren zum Aktualisieren einer Sitzung nach Anspruch 5, wobei das Verfahren als Reaktion darauf, dass die Netzinstanz eine Netzplattform ist, ferner Folgendes umfasst:
vor Senden der Hinweisnachricht an das UE,
Empfangen einer Dienstnachricht von einer AF oder einer NEF, wobei die Dienstnachricht die S-NSSAI enthält, mit der eine zweite PDU-Sitzung, die zum Zugreifen auf einen Anwendungsserver verwendet wird, assoziiert werden muss.

11. Benutzergerät, UE (800), umfassend:
ein Empfangsmodul (801), das zu Folgendem konfiguriert ist:
Herstellen einer Sitzung einer ersten Protokolldateneinheit, PDU, auf einem Teilnetz, das von dem UE ausgewählt ist; und nachdem die Herstellung der ersten PDU-Sitzung abgeschlossen wurde, Empfangen einer Hinweisnachricht von einer Netzinstanz, wobei die Hinweisnachricht eine einzelne Teilnetzauswahl-Unterstützungsinformation, S-NSSAI, umfasst und die Netzinstanz eine Sitzungsverwaltungsfunktion, SMF, ist, die die erste PDU-Sitzung verwaltet,
wobei die Hinweisnachricht eine Sitzungsänderungsbefehl-Nachricht oder eine Sitzungsfreigabebefehl-Nachricht als Reaktion auf die SMF ist, die die S-NSSAI unterstützt, die Sitzungsänderungsbefehl-Nachricht dem UE (800) angibt, eine S-NSSAI, die mit der ersten PDU-Sitzung assoziiert ist, durch die S-NSSAI zu ersetzen, die in der Sitzungsänderungsbefehl-Nachricht enthalten ist, und die Sitzungsfreigabebefehl-Nachricht dem UE (800) angibt, die erste PDU-Sitzung freizugeben und eine neue PDU-Sitzung auf derselben SMF gemäß der S-NSSAI wiederherzustellen; oder
wobei die Hinweisnachricht die Sitzungsfreigabebefehl-Nachricht als Reaktion darauf ist, dass die SMF die S-NSSAI nicht unterstützt, und die Sitzungsfreigabebefehl-Nachricht dem UE (800) angibt, die erste PDU-Sitzung freizugeben und die neue PDU-Sitzung auf einer anderen SMF, die die S-NSSAI unterstützt, wiederherzustellen.

12. Netzinstanz, umfassend:
ein erstes Sendemodul (901), das zu Folgendem konfiguriert ist:
nachdem ein Benutzergerät, UE, eine erste Sitzung einer Protokolldateneinheit, PDU, in einem Teilnetz, das von dem UE ausgewählt wird, hergestellt hat, und wenn die Netzinstanz erfährt, dass die von dem UE hergestellte erste PDU-Sitzung nicht mit einem Dienstfluss übereinstimmt, der für ein bestimmtes Teilnetz ausgewählt werden muss, Senden einer Hinweisnachricht an das UE, wobei die Hinweisnachricht eine einzelne Teilnetzauswahl-Unterstützungsinformation, S-NSSAI, umfasst und die Netzinstanz eine Sitzungsverwaltungsfunktion, SMF, ist, die die erste PDU-Sitzung verwaltet,
wobei als Antwort auf die SMF, die die S-NSSAI unterstützt, die Hinweisnachricht eine Sitzungsänderungsbefehl-Nachricht oder eine Sitzungsfreigabebefehl-Nachricht ist, die Sitzungsänderungsbefehl-Nachricht dem UE angibt, eine S-NSSAI, die mit der ersten PDU-Sitzung assoziiert ist, durch die S-NSSAI zu ersetzen, die in der Sitzungsänderungsbefehl-Nachricht enthalten ist, und die Sitzungsfreigabebefehl-Nachricht dem UE angibt, die erste PDU-Sitzung freizugeben und eine neue PDU-Sitzung auf derselben SMF gemäß der S-NSSAI wiederherzustellen; oder
wobei als Reaktion darauf, dass die SMF die S-NSSAI nicht unterstützt, die Hinweisnachricht die Sitzungsfreigabebefehl-Nachricht ist, und die Sitzungsfreigabebefehl-Nachricht dem UE angibt, die erste PDU-Sitzung freizugeben und die neue PDU-Sitzung auf einer anderen SMF, die die S-NSSAI unterstützt, wiederherzustellen.

## Revendications

1. Procédé de mise à jour de session, exécuté par un équipement utilisateur, User Equipment UE, et comprenant :
l'établissement d'une première session unité de données de protocole, Protocol Data Unit PDU, sur une tranche de réseau sélectionnée par l'UE ; et
après que l'établissement de la première session PDU est achevé, la réception (201) d'un message d'indication en provenance d'une entité de réseau, dans lequel le message d'indication comprend une information d'assistance de sélection de tranche de réseau unique, Single Network Slice Selection Assistance Information S-NSSAI, et l'entité de réseau est une fonction de gestion de session, Session Management Function SMF, qui gère la première session PDU,
dans lequel le message d'indication est un message d'instruction de modification de session ou un message d'instruction de libération de session en réponse au fait que la SMF prend en charge la S-NSSAI, le message d'instruction de modification de session indique à l'UE de remplacer une S-NSSAI associée à la première session PDU avec la S-NSSAI comprise dans le message d'instruction de modification de session, et le message d'instruction de libération de session indique à l'UE de libérer la première session PDU et de rétablir une nouvelle session PDU sur une même SMF selon la S-NSSAI ; ou
dans lequel le message d'indication est le message d'instruction de libération de session en réponse au fait que la SMF ne prend pas en charge la S-NSSAI, et le message d'instruction de libération de session indique à l'UE de libérer la première session PDU et de rétablir la nouvelle session PDU sur une autre SMF qui prend en charge la S-NSSAI.

2. Procédé de mise à jour de session de la revendication 1, dans lequel le message d'indication comprend en outre un nom de réseau de données, Data Network Name DNN.

3. Procédé de mise à jour de session de la revendication 1, dans lequel le message d'indication comprend en outre :
un message de déclenchement d'application envoyé par une plate-forme de réseau, dans lequel le message de déclenchement d'application indique à l'UE d'accéder à un serveur d'application en utilisant une seconde session PDU associée à la S-NSSAI.

4. Procédé de mise à jour de session de la revendication 3, dans lequel, en réponse au fait que le message d'indication est le message de déclenchement d'application, le procédé comprend en outre :
lorsque la seconde session PDU associée à la S-NSSAI n'a pas été établie, l'initiation d'une procédure d'établissement de session PDU pour établir la seconde session PDU associée à la S-NSSAI et utilisée pour accéder au serveur d'application ;
ou
lorsque la seconde session PDU associée à la S-NSSAI a été établie, l'accès au serveur d'application en utilisant la seconde session PDU associée à la S-NSSAI.

5. Procédé de mise à jour de session, exécuté par une entité de réseau et comprenant :
après qu'un équipement utilisateur, User Equipment UE, a établi une première session unité de données de protocole, Protocol Data Unit PDU, sur une tranche de réseau sélectionnée par l'UE et lorsque l'entité de réseau apprend que la première session PDU établie par l'UE ne coïncide pas à un flux de service qui doit être sélectionné relativement à une tranche spécifiée, l'envoi (301) d'un message d'indication à l'UE, dans lequel le message d'indication comprend une information d'assistance de sélection de tranche de réseau unique, Single Network Slice Selection Assistance Information S-NSSAI, et l'entité de réseau est une fonction de gestion de session, Session Management Function SMF, qui gère la première session PDU,
dans lequel, en réponse au fait que la SMF prend en charge la S-NSSAI, le message d'indication est un message d'instruction de modification de session ou un message d'instruction de libération de session, le message d'instruction de modification de session indique à l'UE de remplacer une S-NSSAI associée à la première session PDU avec la S-NSSAI comprise dans le message d'instruction de modification de session, et le message d'instruction de libération de session indique à l'UE de libérer la première session PDU et de rétablir une nouvelle session PDU sur une même SMF selon la S-NSSAI ; ou
dans lequel, en réponse au fait que la SMF ne prend pas en charge la S-NSSAI, le message d'indication est le message d'instruction de libération de session, et le message d'instruction de libération de session indique à l'UE de libérer la première session PDU et de rétablir la nouvelle session PDU sur une autre SMF qui prend en charge la S-NSSAI.

6. Procédé de mise à jour de session de la revendication 5, dans lequel le message d'indication comprend en outre un nom de réseau de données, Data Network Name DNN.

7. Procédé de mise à jour de session de la revendication 5, dans lequel le message d'indication comprend en outre :
un message de déclenchement d'application envoyé par une plate-forme de réseau, dans lequel le message de déclenchement d'application indique à l'UE d'accéder à un serveur d'application en utilisant une seconde session PDU associée à la S-NSSAI.

8. Procédé de mise à jour de session de la revendication 5, dans lequel le procédé comprend en outre :
avant l'envoi du message d'indication à l'UE,
la réception d'un premier message de commande de session en provenance d'une fonction de commande de politique, Policy Control Function, PCF, dans lequel le premier message de commande de session transporte la S-NSSAI déterminée selon une politique de sélection de voie.

9. Procédé de mise à jour de session de la revendication 5, dans lequel le procédé comprend en outre :
avant l'envoi du message d'indication à l'UE,
la réception d'une première demande de service en provenance d'une fonction d'exposition de réseau, Network Exposure Function NEF, ou d'une fonction d'application, Application Function, AF, dans lequel la première demande de service transporte au moins une information parmi une information connexe à une application ou une information connexe à un utilisateur ;
après la détection, selon la première demande de service, que l'UE accède à l'application, l'envoi d'un premier message de demande à une PCF, dans lequel le premier message de demande indique à la PCF d'interroger une politique de sélection de voie ; et
la réception d'un message de réponse en provenance de la PCF, dans lequel le message de réponse transporte la S-NSSAI déterminée selon la politique de sélection de voie.

10. Procédé de mise à jour de session de la revendication 5, dans lequel, en réponse au fait que l'entité de réseau est une plate-forme de réseau, le procédé comprend en outre :
avant l'envoi du message d'indication à l'UE,
la réception d'un message de service en provenance d'une AF ou d'une NEF, dans lequel le message de service transporte la S-NSSAI à laquelle une seconde session PDU utilisée pour accéder à un serveur d'application doit être associée.

11. Équipement utilisateur, User Equipment UE, (800), comprenant :
un module de réception (801), configuré pour : établir une première session unité de données de protocole, Protocol Data Unit PDU, sur une tranche de réseau sélectionnée par l'UE ; et après que l'établissement de la première session PDU est achevé, recevoir un message d'indication en provenance d'une entité de réseau, dans lequel le message d'indication comprend une information d'assistance de sélection de tranche de réseau unique, Single Network Slice Selection Assistance Information S-NSSAI, et l'entité de réseau est une fonction de gestion de session, Session Management Function SMF, qui gère la première session PDU,
dans lequel le message d'indication est un message d'instruction de modification de session ou un message d'instruction de libération de session en réponse au fait que la SMF prend en charge la S-NSSAI, le message d'instruction de modification de session indique à l'UE (800) de remplacer une S-NSSAI associée à la première session PDU avec la S-NSSAI comprise dans le message d'instruction de modification de session, et le message d'instruction de libération de session indique à l'UE (800) de libérer la première session PDU et de rétablir une nouvelle session PDU sur une même SMF selon la S-NSSAI ; ou
dans lequel le message d'indication est le message d'instruction de libération de session en réponse au fait que la SMF ne prend pas en charge la S-NSSAI, et le message d'instruction de libération de session indique à l'UE (800) de libérer la première session PDU et de rétablir la nouvelle session PDU sur une autre SMF qui prend en charge la S-NSSAI.

12. Entité de réseau, comprenant :
un premier module d'envoi (901), configuré pour : après qu'un équipement utilisateur, User Equipment UE, a établi une première session unité de données de protocole, Protocol Data Unit PDU, sur une tranche de réseau sélectionnée par l'UE et lorsque l'entité de réseau apprend que la première session PDU établie par l'UE ne coïncide pas à un flux de service qui doit être sélectionné relativement à une tranche spécifiée, envoyer un message d'indication à l'UE, dans laquelle le message d'indication comprend une information d'assistance de sélection de tranche de réseau unique, Single Network Slice Selection Assistance Information S-NSSAI, et l'entité de réseau est une fonction de gestion de session, Session Management Function SMF, qui gère la première session PDU,
dans laquelle, en réponse au fait que la SMF prend en charge la S-NSSAI, le message d'indication est un message d'instruction de modification de session ou un message d'instruction de libération de session, le message d'instruction de modification de session indique à l'UE de remplacer une S-NSSAI associée à la première session PDU avec la S-NSSAI comprise dans le message d'instruction de modification de session, et le message d'instruction de libération de session indique à l'UE de libérer la première session PDU et de rétablir une nouvelle session PDU sur une même SMF selon la S-NSSAI ; ou
dans laquelle, en réponse au fait que la SMF ne prend pas en charge la S-NSSAI, le message d'indication est le message d'instruction de libération de session, et le message d'instruction de libération de session indique à l'UE de libérer la première session PDU et de rétablir la nouvelle session PDU sur une autre SMF qui prend en charge la S-NSSAI.
